# EUROPEAN PATENT APPLICATION

(11) **EP 2 052 794 A2**
(43) Date of publication of application: **29.04.2009**
(21) Application number: 08167270.1
(22) Date of filing: 22.10.2008
(51) Int. Cl.: B09B 3/00, A62D 3/40, C03B 5/00, B65G 27/00

(54) **Methods and Systems for Asbestos Treatment**

(30) Priority: 25.10.2007 US 982639 P
(71) Applicant: GENERAL KINEMATICS CORPORATION, Crystal Lake, IL 60014 (US)
(72) Inventor: Mathis, Jr., Oscar L., Cary, IL 60013 (US); Fruit, Ronald, Woodstock, IL 60098 (US); Yong, Wei, Crystal Lake, IL 60012 (US)
(74) Representative: Bardehle, Heinz

(57) **Abstract**

A vibratory system (40) for asbestos treatment includes a trough (42,44) with a heat-resistant liner (100), an opening (110), and a discharge end. The system also includes a transportation sub-system including a frame (60) that may be coupled to the trough (42,44), as well as a vibration generator (190) and resilient members (206) coupled to the frame. Further, the system includes a heating sub-system including a furnace (50) that may be disposed across the opening (110). A method for asbestos treatment includes disposing the asbestos in the trough (42,44), disposing the furnace (50) across the opening (110), heating the asbestos in the trough to render the asbestos inert, vibrating the trough to move the inert asbestos along the trough to the discharge end, and collecting the inert asbestos from the trough.

## Description

### Background

This patent is directed to methods and systems for asbestos treatment, and, in particular, to methods and systems for asbestos treatment utilizing vibratory equipment.

### Summary

According to an aspect, vibratory system for asbestos treatment includes a trough having a wall with an inner surface, a heat-resistant liner disposed on the inner surface of the wall to limit heat transfer to the wall, the trough having a longitudinal axis, an opening aligned along the longitudinal axis, and a discharge end disposed at one end of the trough along the longitudinal axis. The system also includes a transportation sub-system including a frame coupled to the trough during at least a transportation phase, a vibration generator coupled to the frame for producing a vibratory force to cause the asbestos material to be moved within the trough in the transportation phase, and resilient members coupled to the frame to support the frame above a base. Further, the system includes a heating sub-system including a furnace coupled to the trough across the opening during at least a heating phase

According to a further aspect, method of asbestos treatment including disposing the asbestos in a trough having an opening, disposing a furnace across the opening, and heating the asbestos in the trough to render the asbestos inert. The method also includes vibrating the trough to move the inert asbestos along the trough to an open end, and collecting the inert asbestos from the trough.

### Brief Description of the Drawings

- Fig. 1: is a plan view of a system for asbestos treatment according to the present disclosure;
- Fig. 2: is a cross-sectional view of a trough of the system of Fig. 1 coupled to a furnace for treatment of asbestos;
- Fig. 3: is a cross-sectional view of the trough of the system of Fig. 1 configured with a cover for transport of the treated asbestos;
- Fig. 4: is an enlarged, fragmentary side view of a frame of the system of Fig. 1;
- Fig. 5: is a side view of a hydraulic clamp of the type used to couple various structures of the system of Fig. 1, with a piston in a retracted state;
- Fig. 6: is a side view of a hydraulic clamp of Fig. 5 with the piston in an ex- tended state;
- Fig. 7: is a plan view of the system of Fig. 1 with an overhead transport system included;
- Fig. 8: is a side view of the interface between various conveyors of the system of Fig. 1;
- Fig. 9: is a flowchart of a method of asbestos treatment according to the present disclosure as implemented, for example, through the use of the system of Fig. 1;
- Fig. 10: is a side view of another system for asbestos treatment according to the present disclosure;
- Fig. 11: is a cross-sectional view of a vibratory conveyor according to still an- other system for asbestos treatment according to the present disclosure; and
- Fig. 12: is a cross-sectional view of an interface between the trough and the fur- nace according to the system of Fig. 11.

### Detailed Description of Various Embodiments

Although the following text sets forth a detailed description of different embodiments of the invention, it should be understood that the legal scope of the invention is defined by the words of the claims set forth at the end of this patent. The detailed description is to be construed as exemplary only and does not describe every possible embodiment of the invention since describing every possible embodiment would be impractical, if not impossible. Numerous alternative embodiments could be implemented, using either current technology or technology developed after the filing date of this patent, which would still fall within the scope of the claims defining the invention.

It should also be understood that, unless a term is expressly defined in this patent using the sentence "As used herein, the term '_' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term be limited, by implication or otherwise, to that single meaning. Finally, unless a claim element is defined by reciting the word "means" and a function without the recital of any structure, it is not intended that the scope of any claim element be interpreted based on the application of 35 U.S.C. §112, sixth paragraph.

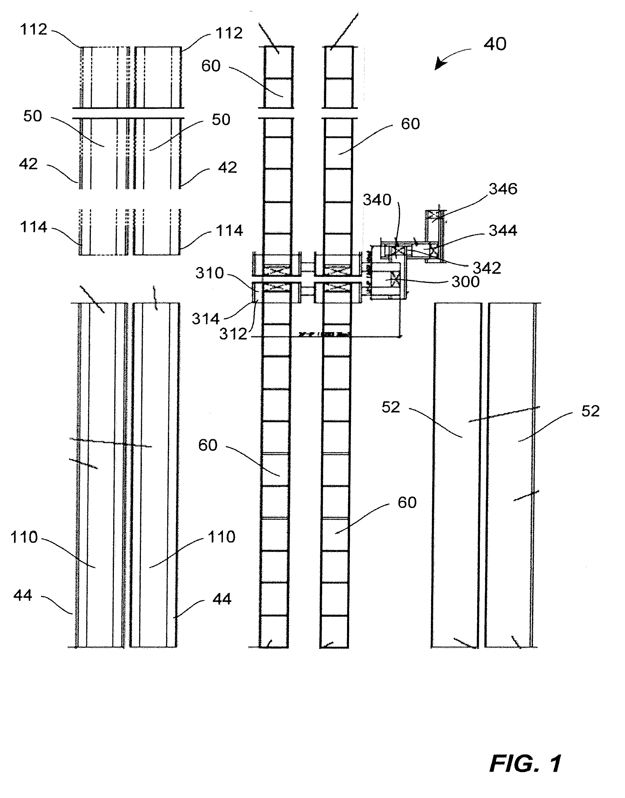

Referring first to Fig. 1, a system 40 for use in the treatment and disposal of asbestos. As illustrated, the system 40 includes four troughs 42, 44. The system 40 may also include two furnaces 50 and at least two covers 52. Further, the system 40 may include four frames 60, with associated vibration generators, as will be discussed in greater detail below.

According to the system 40, the troughs 42, 44 are cycled through a series of phases. During certain phases, the troughs 42, 44 are coupled to the furnaces 50. During other phases, the troughs are coupled to the covers 52. The troughs 42, 44 may also be coupled to the frames 60 to define vibratory conveyors, as will be explained in greater detail below.

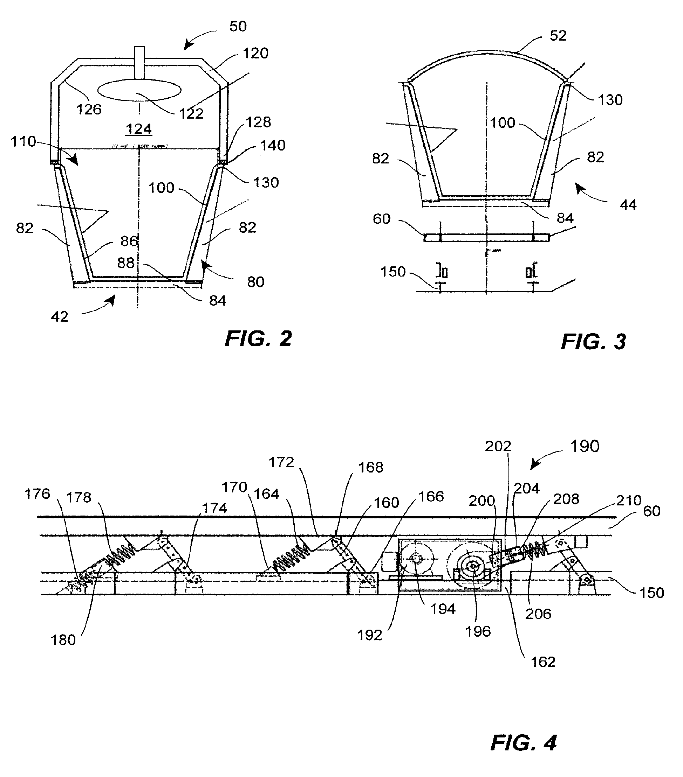

To begin, as illustrated in the upper, left-hand corner of Fig. 1, two of the troughs 42 are illustrated as being disposed on the floor of the facility in which the system 40 is disposed. These troughs 42 are coupled to the furnaces 50, as illustrated in greater detail in Fig. 2.

As can be seen in Fig. 2, the troughs 42 have a wall 80 that consists of three pieces: two side walls 82 and a floor or deck 84. The side walls 82 are coupled to the deck 84 with an inner surface 86 of the side walls 82 at an angle to an inner surface 88 of the deck 84. While the angle defined between the inner surfaces 86 of the side walls 82 and the inner surface 88 of the deck 84 is illustrated as an obtuse angle (i.e., greater than 90 degrees), the angle may be right angle, for example. It is also possible for the wall 80 to be semi-circular in cross section, or to have a U-shaped cross-section that flares at either end.

A heat-resistant liner 100 is disposed on the inner surfaces 86, 88 of the side walls 82 and deck 84. The heat-resistant liner 100 is made of a material that will limit the heat transfer to the wall 80 of the trough 42. For example, the liner 100 may be made of a ceramic material. The ceramic material selected should be able to withstand repeated cycles of heating and cooling, as well as vibration of the trough. In regard to these cycles of heating and cooling, it may be that the asbestos material disposed in the trough will be heated to approximately 1000C over a time period of twenty-four hours, with approximately eight hours spent at approximately 1000C.

It will be recognized that the trough 42 has an opening 110 opposite its deck 84. The opening 110 is aligned along the longitudinal axis of the trough 42 from one end 112 to the other end 114 (see Fig. 1, e.g.). This opening 110 may be used to receive asbestos material, which may be fed into the trough 42 by a variety of methods, including by front-end loader, by conveyor or even manually. This opening also receives the furnace 50, as explained below.

The trough 42 may be closed at the ends 112, 114 by a wall, similar to the side walls 82 in that it may be at an angle to the deck 84 and covered with the liner 100. At least one of the end walls may be moveable relative to the remainder of the trough 42, at least to permit material to be discharged from the trough 42 through the then open end. The moveable end wall may be coupled to the trough 42 so that it remains with the trough 42 even when material is passing through the open end; alternatively, the moveable end wall may be separable from the trough 42 to open the closed end. As illustrated, the end 114 of the trough 42 may be opened to permit material to pass there through.

As noted, the troughs 42 are coupled to the furnaces 50 as illustrated in Fig. 1. In particular, the furnaces 50 include a housing or cover 120 and a burner 122. The burner 122 is attached to and disposed within a space 124 defined by an inner surface 126 of the housing 120. The housing 120 has a rim 128 that mates with upper edges 130 of the side walls 82 and the end walls (not shown). It will be recognized that the liner 100 may extend over the upper edges 130 of the side walls 82 and end walls.

In addition, a seal 140 may be disposed on the upper edges 130 of the side walls 82 and end walls and the rim 128, in between the trough 42 and the furnace 50. The seal 140 may be a woven ceramic material that is capable of withstanding the same environmental conditions as the liner 100. In addition, the seal 140 should be sufficiently flexible to limit the escape of heat, gases and material from inside the combination of the trough 42 and furnace 50.

Moving now to the lower, left-hand corner of Fig. 1, the troughs 44 are illustrated as having neither the furnaces 50 nor the covers 60 coupled thereto. This may occur, for example, before the furnaces 50 are disposed across the opening 110 of the troughs 44. At this time, the asbestos material may be loaded into the troughs 44. Alternatively, the troughs 44 may have neither furnace 50 nor cover 52 coupled thereto after the furnaces 50 have been removed. At this time, the heat-treated asbestos material is in the trough 44 ready for discharge into the remainder of the system 40.

To proceed to discharge, however, the trough 44 is first coupled to one of the covers 52, which covers 52 are disposed in the lower, right-hand portion of Fig. 1. The combination of the trough 44 and the cover 52 is illustrated in Fig. 3.

Referring then to Fig. 3, it will be recognized that the structure of the troughs 44 may be the same as that of the troughs 42. Given that the structure of the troughs 44 is the same as that of the troughs 42, as illustrated, a consistent numbering has been used throughout. Thus, the cover 52 is disposed on the upper edges 130 of the side walls 82 and the end walls. While the cover 52 is illustrated as having a particular curvature, this is meant to be illustrative and non-limiting. Further, while no seal is illustrated between the cover 52 and the edges 130, a seal may be disposed between the cover 52 and the edges 130 to limit escape of treated asbestos material from the trough 44 during discharge of the material from the trough 44. The combination of the trough 44 and the cover 52 may then be coupled to one of the frames 60.

As perhaps best seen in Fig. 4, the frame 60 may be coupled to a base 150 and a counterbalance 162 by a plurality of rigid links 160 and to a counterbalance 162 by a plurality of resilient members 164. The rigid links 160 may each be pivotally attached at a first end 166 to the counterbalance 162, at a second end 168 to the frame 60, and intermediately to the base 150, and the angle formed between each rigid link 160 and the bottom of the frame 60 may be an obtuse angle. The resilient members 164, which may be springs and may be referred to as reactor springs, may each be fixedly attached at a first end 170 to the counterbalance 162 and at a second end 172 to the frame 60, and the angle formed between each resilient member 164 and the bottom may be an acute angle. As illustrated, the plurality of links 160 and the plurality of resilient members 164 may be disposed in pairs, with the ends 168 of the links 160 and ends 172 of the resilient members 164 that make up each pair being attached to the frame 60 adjacent to each other.

As also is visible in Fig. 4, the counterbalance 162 may be coupled to the base 150 by a plurality of resilient members 176. Furthermore, the frame 60 may be coupled to the base 150 by a plurality of resilient members 178. In fact, the resilient members 176, 178, which may be springs, may be coupled to a tube 180 attached to the base 150. The resilient members 176, 178 may be referred to as isolation springs, and may function to limit the transmission of vibrations to the floor.

Coupled between the frame 60 and the counterbalance 162 is a vibration generator 190. The vibratory generator 190 may include a motor 192 with a shaft 194. The motor shaft 194 may be coupled to a driven shaft 196 by a drive belt. The driven shaft 196 may be an eccentric shaft. Attached to the drive shaft 196 via a flange cartridge bearing is a first end 200 of a link 202. A second end 204 of the link 202 is attached via a resilient member 206 to the frame 60; that is, a first end 208 of the resilient member 206 is fixedly secured to the second end 204 of the link 202, while a second end 210 of the resilient member 206 is fixedly secured to the frame 60.

While one system of connections has been described relative to the embodiment of system 40, it will be recognized that other systems may be used. Similarly, while one generator 190 has thus been discussed, other generators may be used according to the knowledge of one skilled in the art, and may be, for example, a brute force vibratory generator or a two-mass vibratory generator according to another arrangement.

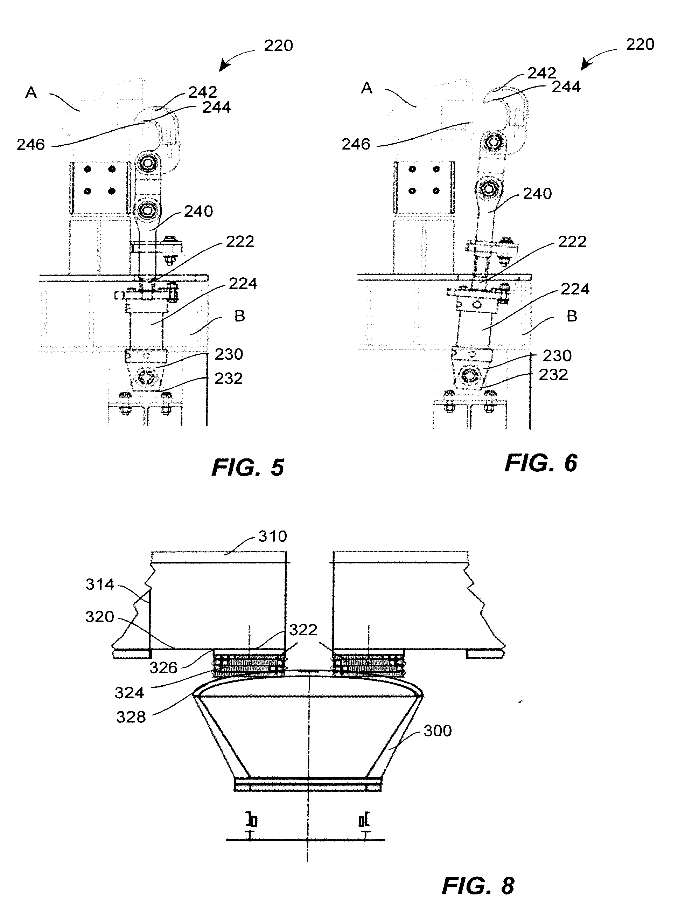

In coupling the furnace 50 or the cover 52 to the trough 42, 44 or in coupling the trough 42, 44 to the frame 60, a variety of mechanisms may be used, including mechanical or electro-mechanical clamps. One type of mechanism that may be particularly suitable for coupling the furnace 50 or cover 52 to the trough 42, 44 or the trough 42, 44 to the frame 60 in a selectively releasable fashion is illustrated in Figs. 5 and 6. It will be recognized that Figs. 5 and 6 illustrate a hydraulic clamp 220 that may be used to couple a first structure A (the trough 44, for example) to a second structure B (the frame 60, for example).

The hydraulic clamp 220 includes a piston 222 and a cylinder 224. The piston 222 moves within the cylinder 224 according to the flow of hydraulic fluid in and out of the cylinder 224. The flow of hydraulic fluid in and out of the cylinder 224 may be controlled through the use of a control system (not shown) including, for example, one or more valves, a source of hydraulic fluid, and a programmable controller.

In general terms, the cylinder 224 is coupled to the structure B, while the piston 222 has mechanism for coupling to the structure A. As illustrated, the cylinder 224 has a first end 230 pivotally connected to the structure B through the use of a mounting bracket 232. The piston 222 has an extension 240 attached thereto, which extension 240 is coupled to a hook assembly 242. The hook assembly 242 has a surface 244 that cooperates with a surface 246 of the structure A to couple the structure A to the structure B. If the piston 222 is advanced out of the cylinder 224 (compare Fig. 6 with Fig. 5), the surfaces 244, 246 are permitted to separate, permitting the structure A to separate from the structure B.

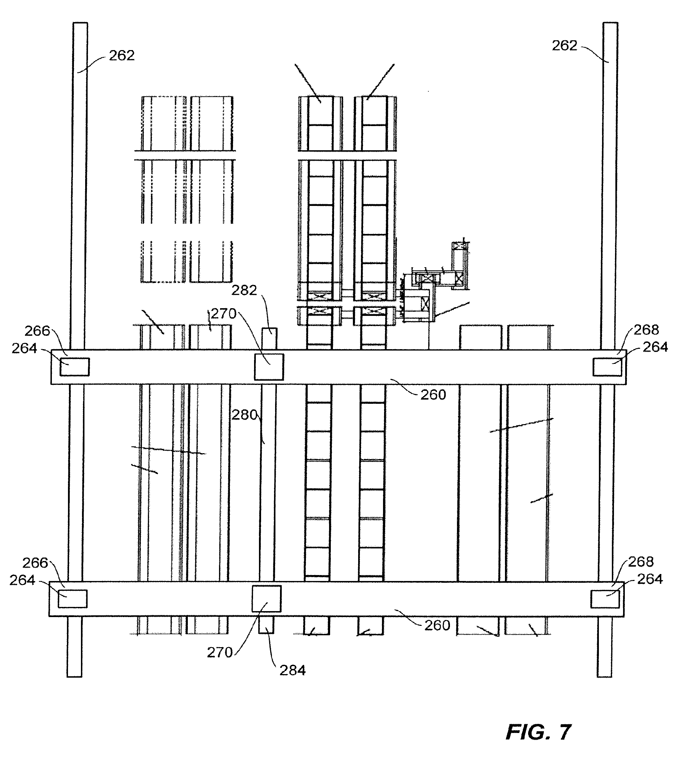

To move the furnaces 50 and the trough/cover 44, 52 combinations, the system 40 may include one or more overhead cranes 260, as illustrated in Fig. 7. The overhead crane or cranes 260 may move along rails 262 that are aligned with the length of the page, as illustrated. The cranes 260 may have wheeled assemblies 264 disposed at either end 266, 268 of the crane 260, which wheeled assemblies 264 cooperate with the rails 262 to guide the movement of the cranes 260. Each crane 260 may also include a hoist 270.

Each hoist 270 is in turn coupled to a beam 280. For example, the hoist 270 of the first crane 260 may be coupled at a first end 282 of the beam 280, while the hoist 270 of the second crane 260 may be coupled at a second end 284 of the beam 280. The beam 280 may support attachment sites (not shown) along their length for coupling the furnace 50, the cover 52, or the combination of the trough 42, 44 and cover 52 to the beam 280. The beam 280 may be raised or lowered, the hoists 270 moved right or left (relative to the page), and the cranes 260 moved up or down (relative to the page) to move the furnace 50, cover 52, and troughs 42, 44 about the system 40.

In addition to the troughs 42, 44, the furnaces 50, the covers 52, and the frames 60, the system 40 may include additional apparatuses which may be used to collect, process, and prepare the treated asbestos for shipment. For example, as seen in Fig. 1, when the through 42, 44 is coupled to the frame 60 for discharge, discharge of the treated asbestos material takes place into a secondary vibratory conveyor 300. The interface between the combination of the trough 42, 44 and the frame and the secondary conveyor 300 is illustrated in Fig. 8.

As seen in Fig. 1, each frame 60 ends in a box-shaped compartment 310 with an open end 312. The edge 314 of the open end 312 of the compartment 310 is designed to mate with the open end of the trough 42, 44/cover 52 combination. A seal may be included to limit the escape of treated asbestos material as the material is discharged from the trough 42, 44, into the compartment 310. As seen in Fig. 8, the compartment 310 has a floor 320 with an opening 322. A flexible connector 324 is coupled at its first end 326 to the floor 320 so as to be aligned with the opening 322. The second end 328 of the flexible connector 324 is coupled to the conveyor 300.

Returning to Fig. 1, once the material has been discharged from the troughs 42, 44 into the secondary conveyor (which may be referred to as a de-accumulating conveyor) 300, the material passes along the conveyor 300 to a crusher feed conveyor 340. The material then passes to a crusher 342, which may be a conventional roller crusher, for example, although other types of crushers may also be used (including vibratory crushers). The crusher feed conveyor 340 may have a motion and feed rate related to the inverse of the current draw of the crusher 342. The material exits the crusher 342 to a series of conveyors 344, 346. The conveyor 346 may be a high-feed, dribble-stop feed conveyor, controlled by a weigh scale. The output of the conveyor 346 may be into a flexible container, such as a bag. The bagged, treated asbestos material may be taken from the facility using a variety of methods.

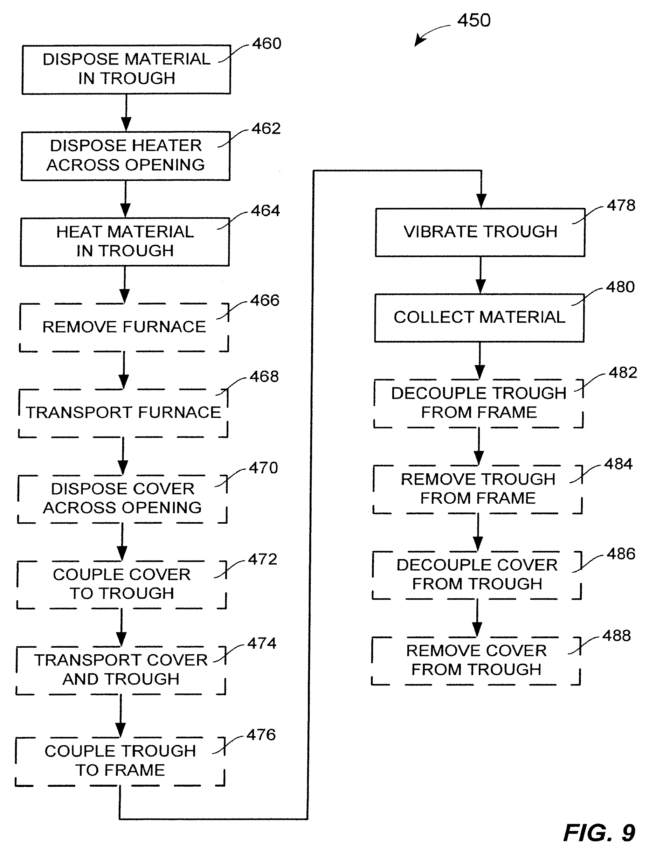

Having described the structure of the system 40, reference is now made to the flowchart of Fig. 9, wherein the method according to the present disclosure is discussed. While the method is discussed in the context of the system 40, it will be recognized that many of the steps may be performed by systems other than the illustrated system 40. For example, additional, alternative systems are described in greater detail below.

A method 450 according to the present disclosure may begin at block 460 with the disposing of the untreated asbestos material into one of the troughs 42, 44. According to the system 40, the asbestos material may be disposed into the troughs 42, 44 through the opening 110 while the trough 42, 44 is disposed on the floor of the facility. At this point, neither the furnace 50 nor the cover 52 is disposed over the opening 110.

The method 450 then passes to the block 462, and a furnace 50 is disposed across the opening 110 of the trough 42, 44. According to the system 40, a furnace 50 is then disposed across each of the troughs 42. The furnace 50 is then used to heat the asbestos in the troughs 42 to render the asbestos inert, as indicated in block 464. For example, the furnace 50 may be used to bring the temperature of the interior of the trough 42 to approximately 1000C over a first approximately eight hour period, to hold the temperature of the interior of the trough 42 at approximately 1000C over a second approximately eight hour period, and to bring the temperature of the interior of the trough 42 to approximately 100C over a third eight hour period.

When the interior temperature of the trough 42 has returned to approximately 100C, the furnace 50 is removed from the trough 42 in the embodiment according to system 40 at block 466. As indicated, this step may be considered to be an optional part of the method 450, for while this step is required for the system 40, it may not be required for all of the embodiments illustrated, as explained in greater detail below. To indicate that the step may be optional, the block is indicated in dashed line. Because the method 450 is being run in parallel with the troughs 44 at the same time as it is with the troughs 42, the furnaces may be transported from the troughs 42 from the troughs 44 at the block 468.

Again, with reference to the system 40, the method 450 may continue at block 470, where the cover 52 is disposed across the opening 110 of one of the troughs 42. Because the system 40 includes more than one trough 42, the step of block 470 may be repeated for the other trough 42. After the cover 52 is disposed across the opening 110, the cover 52 may be coupled to the trough 42 at block 472, by securing one or more hydraulic clamps 220 to the cover 52, for example.

With the cover 52 in place and coupled to the trough 42, the trough 42 and the cover 52 may be transported to one of the frames 60, through the use of the overhead cranes 260, for example, at block 474. With the trough 42 disposed on the frame 60, the trough 42 may be coupled to the frame 60 at block 476, by securing one or more hydraulic clamps 220 to the trough 42, for example. With the trough 42 in place and coupled to the frame 60, the vibration generator 190 may be activated at block 478 to vibrate the trough to move the treated (and thus inert) asbestos along the trough to the open end 114. As noted above, this end 114 would be aligned with one of the compartments 310, wherein the inert asbestos would be collected from the trough 42 (block 480).

Once the material in the trough 42 has been discharged, the method 450 may pass to block 482, where the hydraulic clamps are disengaged to decouple the trough 42 from the frame 60. The trough 42 and cover 52 are then removed from the frame 60 and returned to the floor at block 484. Additional hydraulic clamps are disengaged to decouple the cover 52 from the trough 42 at block 486, and the cover 52 is removed from the trough 42 at block 488, preparatory to beginning the method 450 again.

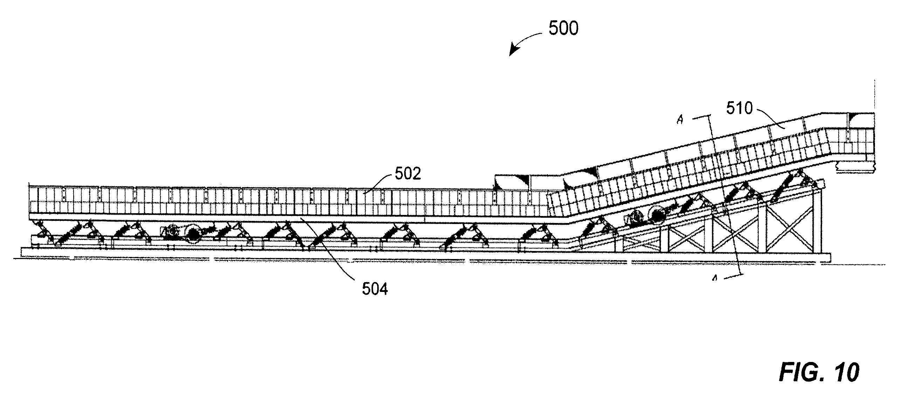

Having thus explained the method 450 relative to the system 40, reference is now made to the system 500 illustrated in Fig. 10. Unlike the system 40, the system 500 includes a trough 502 that is not separated from a frame 504 and associated vibration generator, links, etc. Consequently, the activities of blocks 474, 476, 482, 484 are not applicable to the system 500. The lack of movement of the trough 502 also permits an integrated secondary conveyor 510 to be included in the system 500. However, the system 500 still relies upon a moveable furnace and cover, such that the activities of blocks 466, 468, 470, 472, 486, 488 would still be performed according to such a system.

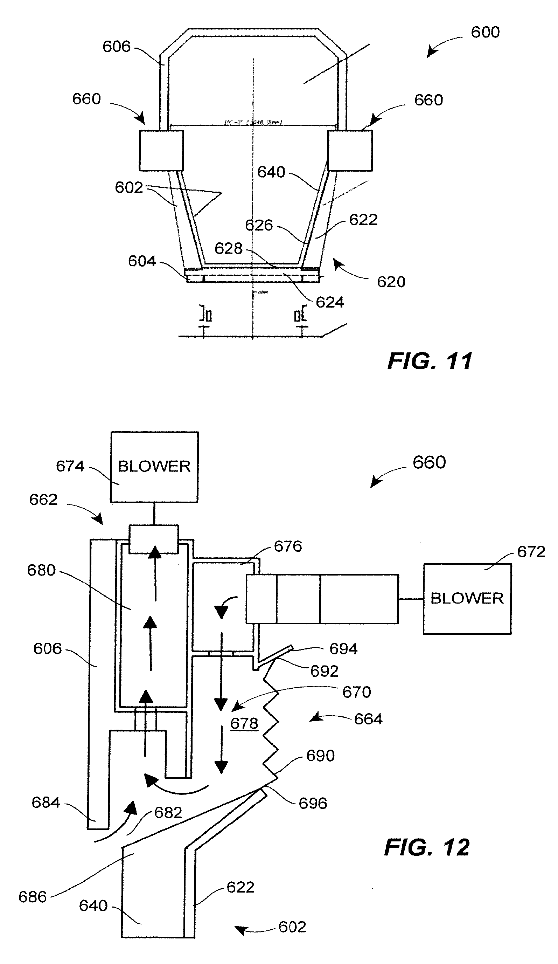

A still further system 600 is illustrated in Figs. 11 and 12. Unlike the system 40, the system 600 includes a trough 602 that is not separated from a frame 604 and associated vibration generator, links, etc. Moreover, the system 600 includes a furnace 606 that is supported above the trough 602 throughout the process, including loading, heating, and discharge. Thus, it may be possible to operate the system 600 according to the activities of blocks 460, 462, 464, 478, 480 of the method 450.

The trough 602, like the troughs 42, 44, includes a wall 620 with side walls 622 and a floor or deck 624. The walls 622 and the deck 624 have inner surfaces 626, 628, respectively. A liner 640 is disposed on these inner surfaces 626, 628.

However, between the trough 602 and the furnace 606 is a seal 660. The seal 660 permits the trough 602 to move relative to the furnace 606 during the activities of blocks 460 and 478, for example, while limiting the escape of heat and material during the activities of block 464 or treated material during the activity of block 478. As seen in Fig. 12, the seal 660 includes two regions, an inner region 662 and an outer region 664, with the inner region 662 disposed between the outer region 664 and the furnace 606.

The inner region 662 includes a passage 670 in fluid communication with at least one blower (which may be a fan) 672, 674, the at least one blower 672, 674 causing air to move through the passage 670. While according to the disclosed embodiment, the blower 672 forces air along the passage 670 from one end of the passage 670, and the blower 674 draws air along the passage 670 from the other end, it will be recognized that either blower may be omitted according to other embodiments.

As illustrated, the passage 670 includes three chambers 676, 678, 680. Air enters the passage 670 through chamber 676, moves along to chamber 678, and exits through chamber 680. As will be recognized, the chamber 678 also is open to the interior of the trough 602 and the furnace 606 via a gap 682 between a lower edge 684 of the furnace 606 and an upper edge 686 of the liner 640. The gap 682 may expand and contract so as to accommodate movement of the trough 602 when the vibration generator associated with the trough 602 is activated.

As mentioned above, the seal 660 also includes an outer region 664. The outer region 664 of the seal 660 is defined by a heat-resistant curtain 690. The heat resistant curtain 690 is attached at a first end 692 to an outer wall 694 of the passage 670 and at a second end 696 to the side wall 622 of the trough 602. Similar to the gap 682, the distance between the first and second ends 692, 696 of the curtain 690 changes as the trough 602 moves. However, unlike the gap 682, the curtain 690 limits further passage of air, gases, material and heat beyond that point.

It is believed that the air flowing through the passage 670 will provide a barrier between the interior of the trough 602/furnace 606 combination and the curtain 690 during the heating of the asbestos. In particular, it is believed that while the temperatures within the interior of the trough 602/furnace 606 may be on the order of approximately 1000C, the temperatures that the curtain 690 will experience will be significantly less. As a consequence, a wider range of material options are available for the material to be used for the curtain 690.

It is believed that the present disclosure may have several benefits, one or more of which may be present in a particular embodiment according to the present disclosure.

## Claims

1. A vibratory system for asbestos treatment, comprising:
a trough having a wall with an inner surface, a heat-resistant liner disposed on the inner surface of the wall to limit heat transfer to the wall,
the trough having a longitudinal axis, an opening aligned along the longitudinal axis, and a discharge end disposed at one end of the trough along the longitudinal axis;
a transportation sub-system including a frame coupled to the trough during at least a transportation phase, a vibration generator coupled to the frame for producing a vibratory force to cause the asbestos material to be moved within the trough in the transportation phase, and resilient members coupled to the frame to support the frame above a base; and
a heating sub-system including a furnace coupled to the trough across the opening during at least a heating phase.

2. The system of claim 1, wherein the heat-resistant liner comprises a ceramic material.

3. The system of claim 1, comprising a seal disposed between the trough and the furnace.

4. The system of claim 3, wherein the seal comprises a woven ceramic material.

5. The system of claim 3, wherein the seal comprises an inner region and an outer region, the inner region disposed between the outer region and the furnace,
the inner region comprising a passage in fluid communication with a blower, the blower causing air to move through the passage, and the outer region comprising a heat-resistant, flexible curtain coupled at one end to an outer surface of the wall of the trough and at the other end to the furnace.

6. The system of claim 5, wherein the chamber is coupled to the furnace to direct air from the passage into the furnace.

7. The system of claim 6, wherein the furnace is coupled to the trough during the transportation phase and the heating phase.

8. The system of claim 1, comprising a cover to be coupled to the trough across the opening during at least the transportation phase

9. The system of claim 1, comprising hydraulic clamps connected to the frame to couple the trough to the frame during at least the transportation phase.

10. The system of claim 1, comprising hydraulic clamps connected to the trough to couple the cover to the trough during at least the transportation phase and to coupled the furnace to the trough in the heating phase.

11. A method of asbestos treatment comprising:
disposing the asbestos in a trough having an opening;
disposing a furnace across the opening;
heating the asbestos in the trough to render the asbestos inert;
vibrating the trough to move the inert asbestos along the trough to an open end; and
collecting the inert asbestos from the trough.

12. The method according to claim 11, comprising:
removing the furnace from across the opening;
disposing a cover across the opening;
transporting the trough and the cover to a frame with a vibration generator coupled to the frame;
activating the vibration generator to move the inert asbestos along the trough.

13. The method according to claim 12, comprising:
removing the trough and the cover from the frame after activating the vibration generator to move the inert asbestos along the trough; and
removing the cover from across the trough.

14. The method according to claim 12, comprising:
coupling the trough to the frame after the trough and the cover have been transported to the frame.

15. The method according to claim 14, wherein the coupling comprises securing a hydraulic clamp to the trough, the hydraulic clamp coupled to the frame.

16. The method according to claim 11, wherein heating the asbestos in the trough comprises heating the asbestos for at least eight hours at 1000C.

17. The method according to claim 11, comprising:
directing an air stream along a passage at the interface between the furnace and the trough.

18. The method according to claim 17, comprising:
directing the air stream from the passage into the furnace.

19. The method according to claim 11, wherein disposing the asbestos material in a trough comprises:
(a) disposing asbestos material at one end of the trough;
(b) vibrating the trough to move the asbestos along the trough so that the asbestos is spaced from the one end;
repeating (a) and (b).

20. The method according to claim 11, comprising:
crushing the inert asbestos to define crushed, inert asbestos; and
disposing the crushed, inert asbestos in flexible containers.
